# EUROPÄISCHE PATENTSCHRIFT

(11) **EP 3 253 551 B1**
(45) Veröffentlichungstag und Bekanntmachung des Hinweises auf die Patenterteilung: **04.11.2020**
(21) Anmeldenummer: 16702875.2
(22) Anmeldetag: 17.01.2016
(51) Int. Cl.: B01D 46/12, B29C 48/285, B29C 48/76, B29C 48/385, B01D 46/00, B29B 7/84, B29C 48/797, B29B 7/48, B29B 7/82

(54) **EXTRUDER MIT EINER MATERIALAUFGABEVORRICHTUNG MIT ENTGASUNGSFILTER**
EXTRUDER WITH A FEEDING DEVICE WITH DEGASSING FILTER
EXTRUDEUSE AVEC UNE TRÉMIE AVEC UN FILTRE DE DÉGAZAGE

(30) Priorität: 02.02.2015 DE 102015001167
(43) Veröffentlichungstag der Anmeldung: 13.12.2017
(73) Patentinhaber: Entex Rust & Mitschke GmbH, 44805 Bochum (DE)
(72) Erfinder: RUST, Harald, 44805 Bochum (DE)
(74) Vertreter: Kaewert, Klaus
(86) Internationale Anmeldenummer: PCT/EP2016/000077
(87) Internationale Veröffentlichungsnummer: WO 2016/124310

(56) Entgegenhaltungen:
- EP-A1- 1 977 877
- EP-A1- 2 218 568
- CH-A- 505 679
- DE-A1- 2 251 425
- DE-A1-102013 208 993
- US-A- 4 088 576
- US-A- 5 772 319
- Derek B Purchas ET AL: "Screens and Meshes" In: Derek B. Purchas and Ken Sutherland: "Handbook of Filter Media", 1. Januar 2002 (2002-01-01), Elsevier Advanced Technology, Oxford, UK, XP055266267, ISBN: 978-1-85617-375-9 Bd. 2, Seiten 201-259, DOI: 10.1016/B978-185617375-9/50007-9, Seiten 213-223

## Beschreibung

Bei den Extrudern werden folgende Hauptgruppen unterschieden:
Einschneckenextruder, Doppelschneckenextruder, Planetwalzenextruder.

Einschneckenextruder bestehen aus einer umlaufenden Schnecke und einem umgebenden Gehäuse. Mit Einschnecken lässt sich ein hoher Druckaufbau und eine große Förderwirkung erzielen. Jedoch ist die Homogenisierung und Dispergierung im Einschneckenextruder schwach. Gleichwohl sind Einschneckenextruder immer noch die meistbenutzten Extruder.

Doppelschneckenextruder bestehen aus zwei parallel zueinander und miteinander kämmenden Schnecken und einem umgebenden Gehäuse. Mit Doppelschnecken lässt sich gleichfalls ein hoher Druckaufbau und eine hohe Förderwirkung erzielen. Die Mischwirkung des Doppelschneckenextruders ist um vieles größer als bei einem Einschneckenextruder, Jedoch erfahren Kunststoffe aufgrund der mechanischen Belastung im Doppelschneckenextruder eine mehr oder weniger große Veränderung ihrer Molekülketten. Es gibt Anwendungen, bei denen das dahinstehen kann. Für andere Anwendungen ist die Erhaltung der Molekülketten wichtig. Dann bietet sich der Planetwalzenextruder an.

Planetschneckenextruder bestehen aus einer mehr Teilen, nämlich einer umlaufenden Zentralspindel, einem die Zentralspindel im Abstand umgebenden Gehäuse mit einer Innenverzahnung und Planetspindeln, welche in dem Hohlraum zwischen Zentralspindel und innen verzahntem Gehäuse wie Planeten um die Zentralspindel umlaufen. Soweit im Folgenden von einer Innenverzahnung des Gehäuses gesprochen wird, so schließt das auch ein mehrteiliges Gehäuse mit einer Buchse ein, welches die Innenverzahnung des Gehäuses bildet. Im Planetwalzenextruder kämmen die Planetspindeln sowohl mit der Zentralspindel als auch mit dem innen verzahnten Gehäuse.

Zugleich gleiten die Planetspindeln mit dem in Förderrichtung weisenden Ende an einem Anlaufring.
Die Planetwalzenextruder besitzen im Vergleich zu allen anderen Extruderbauarten eine extrem gute Mischwirkung, jedoch eine viel geringere Förderwirkung.

Für eine kontinuierliche Aufbereitung von Kunststoffen ist seit einigen Jahrzehnten bekannt, Planetwalzenextruder zu verwenden. Solche Verfahren und entsprechende Planetwalzenextruder sind insbesondere in folgenden Druckschriften beschrieben: DE 19939075A1, CA 698518, DE19653790A, DE 19638094A1, DE 19548136A1, DE1954214A, DE3908415A, DE19939077A, EP1078968A1, EP1067352A, EP854178A1, JP3017176, JP11080690, JP9326731, JP11-216754, JP11-216764, JP10-235713, WO2007/0874465A2, WO2004/101627A1, WO2004/101626A1, WO 2004/037941A2, EP1056584, PCT/EP99//00968, WO 94/11175, US6780271B1, US7476416.

Von Planetwalzenextruderabschnitten/Modulen wird dann gesprochen, wenn ein Extruder sich aus mehreren Abschnitten/Modulen zusammensetzt. Zumeist handelt es sich um unterschiedliche Abschnitte/Module. Seit Jahren hat es sich als günstig erwiesen, Planetwalzenextruderabschnitte/Module mit Abschnitten/Module anderer Bauart zu kombinieren. Insbesondere werden Planetwalzenextruderabschnitte/Module mit einem als Einschneckenextruderabschnitt/Modul ausgebildeten Füllteil kombiniert. Über das Füllteil werden die Einsatzmaterialien für die Extrusion aus einem Fülltrichter abgezogen und in die Planetwalzenextruderabschnitte/Module gedrückt.
Soweit flüssige Treibmittel oder andere flüssige Stoffe in die Planetwalzenextrudserabschnitte/Module eingetragen werden sollen, hat es sich bewährt, diese Flüssigkeiten über Injektionsringe in die Anlage einzuspritzen, die zwischen jeweils zwei Planetwalzenextruderabschnitten/Modulen angeordnet sind.
Es ist auch bekannt, Schmelze über einen Seitenarmextruder oder eine Pumpe unmittelbar in einen Planetwalzenextruderabschnitt/Modul einzutragen.

Wegen der Einzelheiten und Variationen bekannter Planetwalzenextruder bzw. Abschnitten/Modulen wird Bezug genommen auf folgende Druckschriften: DE 102005007952A1, DE102004061068A1, DE102004038875A1, DE102004048794A1, DE102004048773A1, DE102004048440A1, DE102004046228A1, DE102004044086A1, DE102004044085A1, DE102004038774A1, DE102004034039A1, DE102004032694A1, DE102004026799B4, DE102004023085A1, DE102004004230A1, DE102004002159A1, DE19962886A1, DE19962883A1, DE19962859A1, DE19960494A1, DE19958398A1, DE19956803A1, DE19956802A1, DE19953796A1, DE19953793A1.

Für die Extrusion finden neben den Kunststoffen noch diverse andere Materialien Verwendung. Dazu gehören Füllstoffe, Farbstoffe, Weichmacher, Stabilisatoren und andere Zusatz- und Hilfsstoffe bzw. Additive. Alle Stoffe werden im Folgenden als Einsatzstoffe bezeichnet. Die Einsatzstoffe kommen in fester Form oder in flüssiger Form oder in gasförmiger Form vor.

Bei allen Extruderbauarten unterscheidet man zwischen der Füllzone, der Aufschmelzzone, der Mischzone und der Austragzone. Es sind auch noch weitere Unterscheidungen möglich. An zeitgemäßen Extrudern ist zumeist jeder Zone ein Extrudermodul zugeordnet. Das heißt, diese Extruder sind aus Modulen zusammen gesetzt. Die Module sind an einem Gehäuse erkennbar, der dem betreffenden Abschnitt angepasst ist. Jedes Gehäuse ist an jedem Ende mit einem Flansch versehen, so dass jedes Gehäuse an einem Flansch mit seinem benachbarten Gehäuse verbunden werden kann. Die aneinander befestigten Gehäuse umschließen üblicherweise Schnecken bzw. Zentralspindeln, welche sich durch alle Module erstrecken.
Das heißt, die aus Modulen zusammen gesetzten Einschneckenextruder besitzen eine einzige Schnecke, welche sich durch alle Module erstrecken.
Die aus Modulen zusammen gesetzten Doppelschneckenextruder besitzen miteinander kämmende Schnecken, welche sich durch alle Module erstrecken.
Die Planetwalzenextruder besitzen eine Zentralspindel, welche sich durch alle Module erstreckt. Dagegen sind die Planetspindeln auf die einzelnen Module beschränkt.
Extruder mit gemischter Bauart kommen insbesondere in der Kombination von Planetwalzenextrudermodulen mit Füllteilen, die als Einschneckenextrudermodule ausgebildet sind.
Auch bei solcher Extruderbauart ist ein Bauteil vorgesehen, dass sich durch das ganze Gehäuse erstreckt. Dieses Bauteil bildet im Bereich der Planetwalzenextrudermodulen die Zentralspindel und im Bereich des Füllteils die Einschnecke.

Zumeist haben alle Module gleiche Länge.
Dadurch kann es zu Überschneidungen mit den Zonen kommen.

Üblicherweise ist man bemüht, in der Füllzone zu verhindern, dass Luft mit den Einsatzstoffen in den Extruder eingezogen wird. Wo das nicht vollständig gelingt, muss die Luft zu einem späteren Zeitpunkt entfernt werden.
Außerdem kommt es während der Bearbeitung Verarbeitung der Einsatzstoffe im Extruder sehr häufig zu einer Entwicklung von Gasen, welche aus der Schmelze entfernt werden müssen. Die Entgasung ist zum Beispiel beschrieben in DE112009001885, DE112007002171, DE112005002824, DE102013204312, DE102013108369, DE102013101997, DE102013007132, DE102013006667, DE102013000596, DE102013319966, DE102012217383, DE102012217383, DE102012212675, DE102012208778, DE102012202005, DE102012107430, DE102012100710, DE102012022346, DE102012020011, DE102012019908, DE102012008169, DE102012005450, DE102011102923, DE102011088959, DE102011083988, DE102011082441, DE102011076993, DE102011076257, DE102011050314, DE102011011202, DE102011011202, DE102011007425.

Die übliche Entgasung sieht vor, dass an einer gewünschten Stelle im Extruder bzw. in der Schmelze ein Druckabfall erzeugt wird. An der Stelle tritt eingeschlossenes Gas ganz oder teilweise aus der Schmelze aus. Dem austretenden Gas wird Gelegenheit gegeben, durch eine Öffnung im Extrudergehäuse aus dem Extruder auszutreten. Beliebt ist die Anwendung von Entgasungsdomen oberhalb des Extrudergehäuses. Dort kann Schmelze, welche mit dem Gas aus dem Extruder mitgerissen wird, sich unten sammeln.
Die Gefahr des Mitreißens ist bei üblicher Unterstützung der Entgasung durch Beaufschlagung der Entgasungsstelle besonders groß.

Die Erfindung hat sich die Aufgabe gestellt, die Entgasung zu erleichtern. Das wird mit den Merkmalen des Hauptanspruches erreicht. Die Unteransprüche beschreiben bevorzugte Ausführungsformen.
Dabei finden Filter aus Sintermetall Anwendung, um mitgerissene Schmelze von dem austretenden Gas zu trennen. Solche Filter sind aus der DE3310676 bekannt. Darin sind Doppelschneckenextruder mit einer Entgasungsöffnung beschrieben, Die Entgasungsöffnung ist mit einer porösen, gasdurchlässigen Sinterplatte verschlossen. Die Sinterplatte ist der Kontur der Extrudergehäuse-Innenwand angepasst und gegenüber der Innenwand des Extrudergehäuses zurückgesetzt. Die Platte hat in den Ausführungsbeispielen der DE3310676 Abmessungen von 80 Quadratzentimetern.
Zugleich ist dort angegeben, dass ein ununterbrochener zweitätiger Entgasungsbetrieb möglich ist. Andererseits wird in der EP1977877 ein Anbacken der Einsatzmaterialien an der porösen Filterschicht befürchtet. Auch die EP1977877 sieht Sinterplatten als Filterschichten bei der Entgasung vor. Diese als Filterschichten dienenden Sinterplatten sind wie bei der DE3310676 der Gehäuseform angepasst.
Davon unterscheidet sich die Erfindung durch Aufteilung der Filterflächen und durch die Möglichkeit zur Verwendung einfacherer poröser Filterscheiben.

Statt einer einzigen Filterfläche sind mindestens zwei Filterflächen vorgesehen. Extruder mit zwei Filterflächen sind aus der DE102013208993 A1 bekannt. Diese Druckschrift zeigt einen Extruder mit einem Füllteil und einer dem Füllteil vorgeschalteten Dosiervorrichtung mit einer Dosierschnecke 31, die das Einsatzmaterial in einen Zuführtrichter 20 aufgibt. Aus dem Zuführtrichter 20 gelangt das Einsatzmaterial in eine Einlassöffnung 19 im Gehäuse des Füllteiles. Im Füllteil wird eingeschlossene Luft abgezogen. Dabei wird die Luft durch einen Filter abgezogen, der in einer Öffnung in der Mantelfläche des Füllteiles sitzt und mit der Innenfläche des Füllteilmantels abschließt bzw. die Innenfläche des Füllteilmantels im Bereich der Öffnung fortbildet. Das bedingt eine sehr komplizierte Form des Filters.

Vorzugsweise entstehen nach der Erfindung aus einer Filterfläche mindestens zwei kleinere gleiche Filterflächen. Vorzugsweise wird die notwendige Filtergesamtfläche durch gleiche kleinere Filterflächen zusammengesetzt. Je kleiner die Filterflächen sind, desto leichter ist es, mit gleichen Filterscheiben unterschiedliche Filterflächen, auch unterschiedlich gekrümmte Filterflächen zusammen zu setzen. Es können auch gekrümmte Filterflächen aus ebenen Filterscheiben zusammen gesetzt werden. Die Filterscheiben können dabei eckig und/oder rund sein. Vorzugsweise ist eine kreisförmige oder eine quadratische oder rechteckige Form vorgesehen. Die quadratischen oder rechteckigen Filterscheiben lassen sich zu besonders kompakten Filterflächen zusammen setzen. Die kreisförmigen Filterschieben bieten Vorteile in der Strömungstechnik und bei der Reinigung.
Bei Aufteilung unter proportionaler Verkleinerung entstehen aus kreisrunden Sinterscheiben kleinere kreisrunde Sinterscheiben; aus quadratischen Sinterscheiben entstehen durch proportionale Verkleinerung kleinere quadratische Sinterscheiben; aus rechteckigen Sinterscheiben entstehen durch Aufteilung unter proportionale Verkleinerung kleinere rechteckige Sinterscheiben mit Längen und Breiten, die im gleichen Verhältnis stehen wie die Längen und Breiten der größeren rechteckförmigen Sinterscheibe.
Die Aufteilung unter Verkleinerung kann die Verkleinerung auch unproportional erfolgen. Bei der unproportionalen Verkleinerung kann durch die Verkleinerung eine andere Form entstehen. Zum Beispiel kann eine quadratische Filterfläche in mehrere rechteckförmige Filterflächen aufgeteilt werden.
Bei der Aufteilung können auch mehrere verschiedenformatige Filterflächen entstehen.
Die kleineren Filterflächen treten an die Stelle der einen großen Filterfläche.
Dabei können die kleineren Filterflächen zusammen die gleiche Filterfläche wie die eine große Filterfläche bilden oder eine etwas kleinere Filterfläche oder eine etwas größere Filterfläche bilden. Die Abweichung von der größeren Filterfläche beträgt vorzugsweise höchstens 30%, noch weiter bevorzugt höchstens 20% und höchst bevorzugt höchstens 10%. Mit der Aufteilung der Filterflächen eröffnen sich folgende grundsätzlichen Vorteile:
- es können gleiche Filterflächen für verschiedene Extruderbaugrößen Anwendung finden. Das reduziert die Herstellungskosten und Vorhaltungskosten. Je größer die Herstellungsserie wird, desto mehr reduziert sich der Preis, weil Zeiten für das betriebliche Auftragsmanagement entfallen, weil Rüstzeiten entfallen, weil mehr Sintermaterial zu einem günstigeren Preis beschafft werden kann
- die kleineren Filterscheiben können dünner als größere Filterscheiben sein, weil kleinere Filterscheiben aufgrund ihrer Abmessungen weniger bruchgefährdet sind als größere Filterscheiben.

Zwar vergrößert sich der technische Aufwand für den Einbau mehrerer kleinerer Filterflächen gegenüber dem Einbau einer größeren Filterfläche. Das wird durch die vorstehenden Vorteile aber überkompensiert.

Außerdem erlauben die kleinen Sinterscheiben eine merkliche Temperierung der Sinterscheiben über das umgebende Gehäuse. Zwar ist die Gehäusetemperierung an Extrudern üblich. Der Einfluss der Gehäusetemperierung auf einen in das Gehäuse eingebauten großen Filter ist jedoch vernachlässigbar. Anders ist es bei kleinen Filterscheiben. Dort ist der Einfluss der Gehäusetemperierung sehr viel größer. Eine dünne und kleine Scheibe kann sehr viel besser erwärmt bzw. gekühlt werden.

Wahlweise können die Filterscheiben auch aus nichtmetallischen Partikeln, insbesondere aus keramischen Partikeln, bestehen. Solche Partikel können miteinander verklebt werden.

Nach der Erfindung besitzen die erfindungsgemäßen Filterscheiben vorzugsweise eine Dicke von 0,5 bis 4mm, noch weiter bevorzugt eine Dicke von 1 bis 3mm. Der Durchmesser kreisförmiger Filterscheiben beträgt vorzugsweise 10 bis 50mm, noch weiter bevorzugt 20 bis 40 mm. Bei anders geformten Filterscheiben, zum Beispiel bei rechteckigen oder ovalen Filterscheiben ist vorzugsweise eine gleich große Filterfläche wie bei kreisförmigen Filterscheiben vorgesehen. Die Erfindung schließt aber auch die beschriebenen Abweichungen in der Fläche ein. Die angegebenen Toleranzen schließen auch eine Aufteilung in anders geformte Flächen ein. Die Filterfläche ist dabei die Fläche, welche beim Entgasen von dem Gas angeströmt wird (Anströmfläche). Sofern die Filterscheibe in einem Gehäuse oder Rand eingefasst ist, zählt als angeströmte Fläche nur die von der Einfassung umgebene Fläche.
Sinterscheiben bestehen üblicherweise aus Stahlpartikeln oder anderen metallischen Partikeln, die durch Sintern zu einem porösen Ganzen miteinander verbunden sind. Das Sintern erfolgt üblicherweise durch Erwärmung und Druck. Beides lässt sich für den vorliegenden Anwendungsfall in weiten Grenzen variieren. Die metallischen Partikel haben in der erfindungsgemäßen Anwendung kleiner Filterscheiben den zusätzlichen Vorteil hoher Wärmeleitfähigkeit. Die hohe Wärmeleitfähigkeit erleichtert die Temperierung.
Die Porösität lässt sich durch die Wahl der metallischen Partikel einstellen. Je größer die metallischen Partikel sind, desto größer wird der Zwickelraum zwischen den metallischen Partikeln in der bloßen Schüttlage der metallischen Partikel und auch nach anschließendem Sintern der metallischen Partikel. Idealer Weise wird von kugelförmigen Partikeln für die Sinterscheibe ausgegangen. Die Partikelform hängt jedoch sehr von der Herstellung der metallischen Partikel ab. Bei gemahlenen metallischen Partikeln kann mehr oder weniger von einer runden Form ausgegangen werden. Ob es sich dabei zum Beispiel um eine ovale Form oder eine genaue Kugelform handelt, ist in der Praxis nicht von Bedeutung. Auch andere herstellungsbedingte regelmäßige und unregelmäßige Partikel-Formen können in der Praxis zumeist zu Gunsten der Annahme einer Kugelform der metallischen Partikel vernachlässigt werden.
Dabei ergibt sich die notwendige Porosität aus der Partikelgröße der aus dem Gasstrom auszufilternden Partikel.

Die maximale Porengröße der Filterscheibe ist vorzugsweise kleiner als die maximale Größe der Partikel in dem zu filternden Gasstrom. Dabei wird davon ausgegangen, dass zwar anfänglich eine Menge kleinerer Partikel durch das Filter hindurch gelangt. Bereits nach kurzer Zeit bildet sich aber vor dem Filter eine Schicht ausgefilterter Partikel. Durch diese Schicht werden auch die kleinen Partikel aus der Gasströmung ausgefiltert.
Noch weiter bevorzugt ist die maximale Porengröße der Filterscheibe kleiner als die mittlere Größe der aus dem Gasstrom auszufilternden Partikel.
Soweit die auszufilternden Partikel groß genug sind, kann die maximale Porengröße auch kleiner als die kleinste Partikelgröße sein.
Die mittlere Partikelgröße wird nach der Erfindung aus drei aus dem partikelhaltigen Gasstrom abgezogenen Gasvolumen von jeweils einem Liter bestimmt. Die Gasvolumen werden in einem Abstand von jeweils 15 Minuten gezogen und 10 Stunden durch Stehenlassen beruhigt, um die bis dahin abgesetzten Partikel in eine Wasserströmung aufzugeben und die Partikel mittels Sieben zu klassieren.
Die maximale Partikelgröße und die kleinste Partikelgröße können auf gleiche Weise ermittelt werden.
Bei üblichem feinkörnigen Einsatzmaterialien ergibt sich eine maximale Porengröße von 0,03 bis 0,4mm.

Vorzugsweise sind Filterscheiben aus Partikeln vorgesehen, deren Porengröße mit zunehmendem Abstand von der Anströmfläche größer wird. Das wird nach der Erfindung mittels zunehmender Partikelgröße erreicht.
Noch weiter bevorzugt bestehen die Filterscheiben aus Schichten unterschiedlicher Porosität, wobei die Schichten so angeordnet sind, dass die Porengröße von Schicht zu Schicht zunimmt, beginnend von der Schicht, welche die Anströmfläche(Fläche für das partikelbeladene Gas am Filter) bilden. Vorzugsweise ist dabei eine Schichtdicke von maximal 3mm, noch weiter bevorzugt von maximal 2mm und höchst bevorzugt von maximal 1mm vorgesehen.

Der schichtenweise Aufbau der Filterscheiben lässt sich zum Beispiel dadurch erzeugen, dass die unterschiedlichen Schichten separat hergestellt und anschließend miteinander verbunden werden. Die Verbindung kann mechanisch, zum Beispiel durch einen alle Schichten umfassenden Rand, oder zum Beispiel durch Kleben erfolgen.

Der schichtenweise Aufbau kann auch dadurch erfolgen, dass zunächst die Partikel für die unterschiedlichen Schichten in eine Form gebracht und anschließend miteinander versintert werden.

Durch die größer werdende Porosität der Filterschichten kann dem Zusetzen der Filter entgegengewirkt werden. Dies verlängert die Reinigungszyklen für den Filter. Gegebenenfalls kann die Standzeit des Filters bis zur Chargenwechsel am Extruder verlängert werden. Dann kann die Filter-Reinigung mit dem Chargenwechsel zusammen fallen und der Extruderbetrieb nicht durch die Filterreinigung gestört werden.
Die Filterreinigung wird auch als Regeneration der Filter bezeichnet.
Bei unvermeidbarer Regeneration bietet die erfindungsgemäße Aufteilung der Filterflächen weitere Vorteile. Will man den Extruderbetrieb ohne Unterbrechung der Filterung fortführen, so kann das mit einer zusätzlichen Filterfläche geschehen, die im Wechsel mit der anderen Filterfläche betätigt werden, wobei die nicht zur Gasabsaugung genutzten Filterflächen regeneriert werden. Das regenerieren erfolgt dabei vorzugsweise durch Beaufschlagung mit Gas. Wahlweise wird das Regenerieren mit dem Gas erreicht, das vorher an einer aktuell zum Ausfiltern genutzten Filterfläche abgesaugt wird. Zumeist können auch eine Vielzahl anderer Gase genutzt werden, insbesondere Luft. Bei ausreichender Druckaufladung des zum Regenieren vorgesehenen Gases reichen eine oder wenige Druckstöße aus, um die betreffenden Filterscheiben wieder frei zu blasen. Solches Gas steht handelsüblich als Druckluft zur Verfügung. Vorzugsweise geschieht das mit einem Kompressor, von dem Leitungen zu den Saugleitungen führen, die an jeder Filterfläche zur Absaugung des Gases vorgesehen sind. Je näher die Druckluftleitungen an den Filterflächen in die Saugleitungen münden und je dichter an der Einmündung der Druckluftleitung ein Ventil zum Verschließen der Saugleitung angeordnet ist, desto geringer wird das zum Regenieren erforderliche Gasvolumen. Vorzugsweise sind kombinierte Schieberventile vorgesehen, welche im Falle der Betätigung zunächst die Saugleitung schließen und dann die Druckluftleitung zur Beaufschlagung der Filterscheiben öffnen. Kurz nach dem Öffnung wird das Ventil wieder in die Ausgangsstellung zurückbewegt. Dadurch entsteht ein Druckstoß. Der Vorgang kann so oft wiederholt werden, wie notwendig.
Mit den erzeugten Druckstößen dringt nur sehr wenig Gas/Luft beim Regenerieren aus den Filtern in die Zuführung zu dem Extruder. Dort tritt eine Vermischung mit dem abzusaugenden Gas ein. Vorzugsweise wird mit der Regenierung der Filter nicht gewartet, bis die Filterscheiben sich weitgehend zugesetzt haben. Vielmehr wird die Regenierung vorzugsweise schon betätigt, wenn der mittlere Durchflusswiderstand durch die Filterscheiben merklich zugenommen hat. Der mittlere Durchflusswiderstand wird vorzugsweise ermittelt aus dem Verlauf der Werte für den Durchflusswiderstand über eine Dauer von mindestens 20 Sekunden, weiter bevorzugt über die Dauer von mindestens 40 Sekunden und höchst bevorzugt von mindestens 60 Sekunden. Außerdem wird setzt die Regenerierung vorzugsweise erst bei einer Änderung des mittleren Durchflusswiderstandes von mindestens 10%, weiter bevorzugt von mindestens 20% und höchst bevorzugt von mindestens 30% in Gang gebracht. Auf dem Wege wird die Wirkung von Änderungen des Durchflusswiderstandes gedämpft, so dass vorzugsweise nur wesentliche Änderungen von einiger Dauer die Regenerierung auslösen können.

Je geringer die für einen Druckstoß verwendete Gasmenge ist, desto weniger können die Druckstöße Einfluss auf die Materialzuführung zum Extruder haben. Darüber hinaus hat das Volumen der Zuführung Einfluss auf das Drucksituation. Je größer das Volumen der Partikelzuführung ist, desto geringer wird die Auswirkung von Druckstößen aus der Filterregenierung.

Bei den Druckstößen wird nicht nur der Filter frei geblasen, sondern auch jede sich auf den Filtern aufbauende Partikelschicht abgetragen. Die Schicht baut sich beim Ausfiltern der Partikel aus dem abgezogenen Gas vor den Filterscheiben auf.
Die Schichtdicke wird vorzugsweise durch eine Stopfschnecke begrenzt. Anstelle der einen Stopfschnecke können auch zwei Schnecken in Form einer Doppelschnecke vorgesehen sein. Im Weiteren wird nur von einer Stopfschnecke gesprochen. Das schließt die Doppelschnecke ein.
Die Stopfschnecke dreht sich in der Zuführungsleitung zum Extruder. Die Zuführungsleitung bildet an der Stelle das Gehäuse der Stopfschnecke und umgibt die Stopfschnecke zumindest mit dem notwendigen Bewegungsspiel. Es kann aber auch ein darüberhinaus gehender Abstand zwischen der Stopfschnecke und der umgebenden Zuführung/Gehäuse vorgesehen sein. Dieser Abstand und der Abstand der Filterscheibe von der Stopfschnecke bestimmen die mögliche Schichtdicke der Partikel auf der Anströmfläche der Filterscheiben. Dabei können die Filterscheiben mit der Innenfläche der Zuführung/Gehäuse abschließen/bündig sein. Die Filterscheiben können jedoch auch gegenüber der Innenfläche der Zuführung/Gehäuse zurückstehen, sogar auch gegenüber der Innenfläche der Zuführung/Gehäuse vorstehen.
Die Stopfschnecke trägt alle Partikel in ihrem Zugriffsbereich von den Filterscheiben ab.

Die Stopfschnecke schiebt die von den Filterscheiben abgetragenen Partikel in die Einlassöffnung des Extruders.

Je nach Beschaffenheit der Partikel ist eine Temperierung der Filterscheiben von großem Vorteil. Dazu werden die erfindungsgemäßen Filterscheiben vorzugsweise in einem temperierbaren Rahmen gehalten. Dabei kann es sich um einen gemeinsamen Rahmen für mehrere oder alle Filterscheiben handeln oder es ist ein separater Rahmen für jede Filterscheibe vorgesehen. Die Rahmen besitzen Kanäle für die Durchleitung von Temperierungsmittel. Wahlweise besitzen die Rahmen zugleich einen Anschluss an die Kanäle für Temperierungsmittel in der Partikelzuführung/Zuführungsgehäuse der Stopfschnecke.

Temperaturkontrolle heißt, dass zur Einhaltung einer gewünschten Temperatur den Filterscheiben Wärme zugeführt wird oder Wärme von den Filterscheiben abgezogen wird. Vorzugsweise erfolgt die Temperierung der Zuführung/Gehäuse in gleicher Weise wie die Temperierung des Extruders. Wahlweise ist auch eine vereinfachte Temperierung an der Partikelzuführung/Zuführungsgehäuse vorgesehen.
Die Temperierung des Extruders wird vorzugsweise mit Wasser erreicht. Zum Teil wird für die Temperierung des Extruders auch Öl verwendet. Wasser ist auch für die Partikelzuführung/Zuführungsgehäuse das bevorzugte Temperierungsmittel. Aber auch eine Kühlung mit Luft kommt in Betracht. Dann ist vorzugsweise eine Unterstützung der Luftkühlung mit einem Gebläse vorgesehen.

Die Temperierung an einem Extruder erfolgt üblicherweise mit einem zweischaligen Extrudergehäuse. Die beiden Schalen werden von einem Temperierungsmittel durchströmt. Das Temperierungsmittel ist in der Regel Wasser. Es kommt aber auch eine Temperierung mit Öl vor.
Die Temperierung erfolgt mittels gesteuerter Wärmetauschung. Mit dem Temperierungsmittel wird dem Extruder bei Bedarf Wärme zugeführt oder Wärme aus dem Extruder abgezogen. Dazu wird das Temperierungsmittel bei Bedarf zur Beheizung oder zur Kühlung genutzt. Das bei der Beheizung des Extruders abgekühlte Temperierungsmittel wird in einem Wärmetauscher wieder auf eine zur Beheizung erforderliche Temperatur gebracht. Das bei einer Kühlung des Extruders erwärmte Temperierungsmittel wird in einem Wärmetauscher wieder auf die erforderliche Kühltemperatur gebracht.

Bei der Benutzung der Temperierungsanlage des Extruders für die Temperierung der Partikelzuführung/Zuführungsgehäuse ist vorzugsweise eine Verbindung zwischen dem Wärmetauscher der Extruder-Wärmetauscheranlage und der Partikelzuführung/Zuführungsgehause vorgesehen, so dass bei eine Beheizung des Extruders gleichzeitig eine Beheizung der Partikelzuführung/Zuführungsgehäuse und bei einer Kühlung des Extruders gleichzeitig eine Kühlung der Partikelzuführung/Zuführungsgehäuse erfolgen kann.

Das Temperierungsmittel wird am zweischaligen Extrudergehäuse zwischen beiden Schalen mit Stegen geführt. Vorzugsweise sind die Stege Bestandteil der inneren oder der äußeren Schale des Extrudergehäuses. Üblicherweise entstehen die Stege durch Einarbeitung von Führungsnuten in der Oberfläche der ausgewählten Schale. Aus den Führungsnuten in der einen Schale entstehen Kanäle, wenn die Führungsnuten von der anderen Schale beim Zusammenbringen beider Schalen geschlossen werden.
Die Führungsnuten verlaufen wie Gewindegänge mit einer gewählten Steigung.
Die Führungsnuten können eingängig oder mehrgängig eingearbeitet werden. Bei zweigängigen Nuten liegen jeweils zwei Gänge nebeneinander. Das heißt, bei diesen Nuten winden sich die Gänge gemeinsam wie ein Schraubengewinde in der Schalenoberfläche des Extrudergehäuses. Mit zweigängigen Nuten kann bei gleichem Nutenquerschnitt und sonst gleichen Bedingungen doppelt so viel Temperierungsmittel wie mit einer eingängigen Nutenführung transportiert werden. Bei dreigängigen Nuten verdreifacht sich die Menge usw. Das Temperierungsmittel wird zum Beispiel an einem Gehäuseende in die Führungsnuten eingespeist und an dem anderen Gehäuseende abgezogen. Wahlweise sind an einem Gehäuse auch mehrere Stellen zum Einspeisen und Abziehen von Temperierungsmittel vorgesehen, so dass sich an einem Gehäuse mehrere Stellen ergeben, die unabhängig voneinander temperiert werden können.
Im Falle von Anschlüssen für einen Materialeintrag in den Extruder bzw. für einen Materialaustrag aus dem Extruder, ist es bei einer Anordnung von Kanälen für das Temperierungsmittel in dem dazu doppelschaligenMantel der Partikelzuführung/Zuführungsgehäuse günstig, wenn die Kanäle für das Temperierungsmittel nicht an den Anschlüssen enden, sondern um die Anschlüsse herum geführt sind.
Eine solche Technik ist aus der Fig. 3 und der zugehörigen Beschreibung der DE 102006018686 zu entnehmen
Die Kanäle bewirken eine Zwangsführung des Temperierungsmittels.

Wahlweise strömt das Temperierungsmittel auch ohne Zwansführung(ohne Kanalbildung) durch den Hohlraum des doppelschaligen Mantels der Partikelzuführung/Zuführungsgehäuse. Diese Bauweise verringert die Herstellungskosten.

Stopfschnecken/Stopfwerke sind in diversen Druckschriften auch in Kombination mit Extruder, auch in Kombination mit Planetwalzenextrudern beschrieben. Beispielhaft wird Bezug genommen auf DE102007050466, DE102007041486, DE20003297, DE19930970, DE, DE102008058048, DE102007059299, DE102007049505, DE102006054204, DE102006033089, DE102004026599, DE19726415, DE10334363, DE20200601644, DE20200401971,DE10201000253, DE102009060881, DE102009060851, DE102009060813. Die Stopfschneck/Stopfwerk kann auch benutzt werden, wenn das für den Extruder vorgesehene Einsatzmaterial nicht allein aufgrund seines Gewichtes aus dem Fülltrichter des Füllteiles austritt und in die Einlauföffnung eintritt. Das ist zum Beispiel bei Fasern der Fall, die mit Kunststoff zu vermischen sind. Die Stopfschnecke/Stopfwerk zwingt das Einsatzmaterial dann in die Einlauföffnung des Extruders.

Die erfindungsgemäße Entgasung der in den Extruder einzuführenden Partikel erfolgt vorzugsweise in der Füllzone des Extruders. Die Füllzone ist der Extruderabschnitt, in dem die Hauptkomponenten des Einsatzmaterials dem Extruder zugeführt werden. In der Füllzone werden vorzugsweise Einschneckenextrudermodule eingesetzt. Es können aber auch Doppelschneckenextrudermodule und sogar Planetwalzenextrudermodule eine Füllzone bilden.
Bei dem Einschneckenmodul ist nur eine Schnecke vorgesehen. Der Vorteil der Einschnecke sind geringe Kosten und ein hoher Druckaufbau im Einsatzmaterial. An den Einschneckenmodul der Füllzone schließen sich für nachfolgende Extusionszonen zumeist weitere Einschneckenmodule an. Es können sich aber auch andere Module wie Planetwalzenextrudermodule anschließen. Die Planetwalzenextrudermodule besitzen ein innen verzahntes Gehäuse, eine in dem Gehäuse umlaufende Zentralspindel und zwischen der Zentralspindel und dem Gehäuse umlaufende Planetspindeln. Diese Zentralspindel und die Planetspindeln sind am Umfang verzahnt. Es kämmen die Zentralspindel und die Planetspindeln miteinander sowie die Planetspindeln mit dem innen verzahnten Gehäuse.

Bei dem Doppelschneckenextrudermodul für die Füllzone wirken zwei parallel angeordnete und miteinander kämmende Schnecken zusammen. An den Doppelschneckenextrudermodul schließen sich in der Praxis nur weitere Doppelschneckenextrudermodule an.

Der als Füllzone vorgesehene Planetwalzenextrudermodul besitzt die gleichen Elemente, wie sie vorstehend beschrieben sind. Vorzugsweise sind dabei jedoch besondere Planetspindeln vorgesehen. Es sind unterschiedliche Bauarten für die Planetspindeln bekannt.
Bei normalverzahnten Planetspindeln verläuft die Verzahnung gleichmäßig von einem Spindelende zum anderen Spindelende.
Sogenannte Igelspindeln entstehen, wenn in regelmäßigen Abständen ringförmige Ausnehmung/Nuten in die normale Verzahnung eingearbeitet werden. Die Nutränder/Wände stehen dabei vorzugsweise nicht senkrecht zur Spindellängsachse sondern verlaufen schräg dazu.
Sogenannte Noppenspindeln entstehen, wenn eine normal verzahnte Spindel eine gegenläufige Verzahnung eingearbeitet wird.
Sogenannte Transportspindeln entstehen, wenn an einer normal verzahnten Spindel ein oder mehrere Zähne über eine wesentliche Länge entfernt werden.

Kombinierte Planetspindeln entstehen, wenn die Spindeln Abschnitte unterschiedlicher Verzahnung aufweisen.

Für alle Spindelarten ist von Vorteil, wenn die Zähne in dem Bereich eine Abflachung besitzen, mit dem sie sich an den Einfüllöffnungen vorbei bewegen. Das bewirkt eine Raumvergrößerung im Einfüllbereich.

Die Abflachung findet vorzugsweise auch in einem Bereich statt, der sich in Umlaufrichtung der Zentralspindel an die Einlauföffnung anschließt. Bei ausreichender Stabilität der Planetspindeln hat die durch die Abflachung teilweise wegfallende Stütze der Planetspindeln keine Auswirkungen auf die Planetspindeln. Die Planetspindeln sind an ihren Enden ausreichend zwischen der Zentralspindel und der Gehäuseinnenverzahnung gehalten, weil die Gehäuseinnenverzahnung dort volle Zähne aufweist. Die aus der wegfallenden Stütze resultierende zusätzliche Biegelast der Planetspindeln wird von üblichen Planetspindeln ohne weiteres getragen.

Im Prinzip kann die Abflachung in Umlaufrichtung der Zentralspindel gleichmäßig verlaufen. Vorzugsweise ist jedoch vorgesehen, dass die Abflachung in Umlaufrichtung der Zentralspindel geringer wird. Dadurch entsteht eine trichterförmige Vergrößerung des Hohlraumes zwischen der Gehäuseinnenverzahnung und der Zentralspindel. Diese Vergrößerung verringert den Widerstand des Einsatzmaterials bei deren Einziehen in den Extruder. Die Trichterform lenkt das Einsatzmaterial in vorteilhafter Weise zwischen die Plaanetwalzenteile des Füllteiles.
Die Abflachung kann bis in den Zahngrund erfolgen. Vorzugsweise erfolgt eine Reduzierung der Zahnhöhe um maximal 90%, noch weiter bevorzugt um 80%.
Trotz Abflachung wird immer noch alles Einsatzmaterial, welches in den Raum der bisherigen Zahnlücken gelangt, durch die Zähne der umlaufenden Planetspindeln verdrängt. Um zugleich zu verhindern, dass eine Ablagerung auf den Abflachungen stattfindet, können die abgeflachten Zähne mit neuen, weniger geneigten Zahnflanken versehen werden, so dass dort neue Zähne mit einem vorzugsweise gerundeten neuen Zahnkopf entstehen, so dass das aus dem bisherigen Zahngrund verdrängte Einsatzmaterial alles an den neuen Zahnflanken anhaftende Einsatzmaterial wegschiebt.
Solche Zahnänderungen lassen sich unter anderem mit elektrisch betriebenen Erodiervorrichtungen herstellen. Dabei wird mit einer Elektrode gearbeitet, welche der gewünschten neuen Abflachungszahnform angepaßt ist und mit dem Gehäuse in ein Erodierbad getaucht wird. Dabei wird die Elektrode dicht über die abzuflachende Verzahnung gebracht und das Werkstück mit Strom beaufschlagt, so dass sich die Moleküle aus der Oberfläche der abzuflachenden Verzahnung lösen und der Elektrode zuwandern.
Mit zunehmender Verformung der abzuflachenden Verzahnung wird die Elektrode nachgeführt, so dass ein gewünschter, geringer Abstand gewahrt bleibt.

Die beschriebene Raumvergrößerung durch Abflachung der Gehäuseinnenverzahnung ist davon abhängig, in welchem Maß die Abflachung sich in Umlaufrichtung der Zentralspindel erstreckt und in welchem Maß die Abflachung sich in axialer Richtung der Zentralspindel erstreckt.

Vorzugsweise ist das Maß der Abflachung mindestens 1/10, noch weiter bevorzugt mindestens 1/5 und höchst bevorzugt mindestens ½ des Umfanges des Teilkreises der Gehäuseinnenverzahnung.

Die Erstreckung der Abflachung in axialer Richtung der Zentralsprindel wird als Breite bezeichnet. Die Breite ist höchstens 30% größer oder kleiner als die Öffnungsweite der Einlauföffnung, vorzugsweise höchstens 20% größer oder kleiner als Öffnungsweite der Einlauföffnung und noch weiter bevorzugt höchstens 10% größer oder kleiner als die Öffnungsweite der Einlauföffnung. Höchst bevorzugt ist die Bereite der Abflachung gleich der öffnungsweise der Einlauföffnung.

An den bekannten Transportspindeln werden in der Praxis mindestens drei gleichmäßig um Spindelumfang verteilte Zähne entfernt.
Wahlweise werden auch mehr Zähne entfernt. Vorzugsweise verbleiben mindestens jeweils 3 gleichmäßig am Umfang der Planetspindeln. Es kann auch jeder vierte oder jeder dritte oder jeder zweite Zahn entfernt werden. Es kann können auch alle Zähne bis auf einen Zahn entfernt werden.
Soweit mehr als ein Zahn verbleibt, sind die Zähne vorzugsweise gleichmäßig am Umfang der Spindeln verteilt.
Dadurch entsteht ein reduzierter Zahnbesatz im Unterschied zu nicht reduziertem Zahnbesatz. Die Entfernung der Zähne erfolgt vorzugsweise bis in den Zahngrund. Denkbar ist auch eine darüber hinausgehende Materialausarbeitung, ebenso eine nur teilweise Entfernung der Zähne.
Alternativ werden die Transportspindeln von Anfang an so hergestellt, dass sie in der Form entstehen, welche entsteht, wenn an Standardspindeln einzelne oder mehrere Zähne entfernt werden.
Durch die ganze oder teilweise Entfernung bestimmter Zähne entsteht bei unverändertem Fortbestand der übrigen Zähne eine Planetspindel mit mehr Förderwirkung.
Es hat sich gezeigt, dass die Transportspindeln im Gegensatz zu anderen Planetsprindel das aus einem Aufgabetrichter in den Planetwalzenextruderabschnitt/Modul laufende Material gut aufnehmen.
Die Zahl der verbliebenen Zähne der Transportspindeln beträgt wahlweise höchstens 4, vorzugsweise 3, nach weiter bevorzugt 2 und höchst bevorzugt 1.
Die erfindungsgemäße "ganz oder teilweise" Ausbildung der Planetspindeln als Transportspindeln heißt, dass
a)Planetspindeln außerhalb des Bereiches der Einlauföffnung mit einer anderen Verzahnung versehen sind
   und/oder
b)Transportspindeln im Bereich der Einlauföffnung mit Planetspindeln anderer Verzahnung kombiniert ist.

Von Vorteil ist, wenn die Planetspindeln an dem gegen die Förderrichtung weisenden Ende außerhalb des Einlaufbereiches eine Normalverzahnung besitzen. Dort wird die größere Förderwirkung der Normalverzahnung genutzt, um zu verhindern, dass einlaufendes Einsatzmaterial sich entgegen der Förderrichtung des Extruders ausbreitet.
Eine Normalverzahnung kann aber außerhalb des Einlaufbereiches auch an dem in Förderrichtung des Planetwalzenextruderabschnitts/Moduls vorgesehen sein.
Wahlweise können Planetspindeln eines als Füllteil dienenden Planetwalzenextruderabschnitts/Moduls, die als Transportspindeln ausgebildet sind, mit anders ausgebildeten Planetspindeln kombiniert werden. Das heißt, der Planetspindelbesatz(Gesamtheit aller Planetspindeln) eines als Füllteil dienenden Planetwalzenextruderabschnitts/Moduls kann wahlweise auch zum Teil aus anders verzahnten Planetspindeln bestehen. Vorzugsweise ist der Anteil der Planetspindeln mit Transportspindelverzahnung mindestens 50%, vorzugsweise mindestens 70% und noch weiter bevorzugt mindestens 90% vom Planetspindelbesatz.

Bei teilweiser Verwendung von Transportspindeln für den Planetspindelbesatz sind die Planetspindeln mit Transportspindelverzahnung vorzugsweise gleichmäßig in dem Planetspindelbesatz verteilt.
Bei einem Planetspindelbesatz, der insgesamt mit Transportspindeln versehen ist, ist die Zahl der Zähne an den Transportspindeln so gewählt, dass mindestens innerhalb von 10 Umläufen der Planetspindeln um die Zentralspindel ein Planetspindelzahn in jede Zahnlücke der Zentralspindelverzahnung und in jede Zahnlücke der Innenverzahnung des umgebenden Gehäuses ein Zahn greift. Vorzugsweise erfolgt dieser Zahneingriff innerhalb von mindestens 7 Umläufen der Planetenspindeln um die Zentralspindel, noch weiter bevorzugt innerhalb von mindestens 4 Umläufen der Planetenspindeln um die Zentralspindel und höchst bevorzugt innerhalb von 1 Umlauf der Planetenspindeln um die Zentralspindel. Der Zahneingriff bewirkt eine Reinigung der Verzahnung.
Der Zahneingriff kann zum Beispiel dadurch kontrolliert/ausgelegt werden, dass ein bei Raumtemperatur schmelzflüssiges, farbiges Material mit ausreichender Haftung an Planetenspindeln, Zentralspindel und Innenverzahnung des Gehäuses in deren Zahnlücken geschmiert wird. Dann kann geklärt werden, nach wieviel Umläufen der Planetenspindeln um die Zentralspindel ein gewünschter Zahneingriff erfolgt ist. Das geschieht dann zum Beispiel nach einem Umlauf oder 4 Umläufen oder 7 Umläufen oder 10 Umläufen der Planetspindeln um die Zentralspindel durch Öffnen des erfindungsgemäßen Füllteiles.

Bei dem Vorgang steht der Umlauf der Planetspindeln um die Zentralspindel in einem festen Verhältnis zu der Umdrehung der Zentralspindel. Für die vorstehende Kontrolle/Auslegung kann die Zentralspindel des Füllteiles von Hand leicht gedreht werden, wenn das Füllteil von den übrigen Extruderabschnitten/Modulen gelöst ist. Dabei kann die Bewegung der Zentralspindel mit einem Musterstück der Zentralspindel simuliert werden. Wenn der gewünschte Zahneingriff nicht innerhalb der gewünschten Umlaufzahl der Planetenspindeln um die Zentralspindel erreicht wird, können die Planetspindeln gegen andere Planetspindeln ausgewechselt oder zusätzliche Planetspindeln zum Einsatz kommen. Die anderen Planetspindeln können als Transportspindeln mehr Zähne aufweisen und/oder anders angeordnete Zähne aufweisen. Wahlweise reicht schon die Auswechselung einer Transportspindel gegen eine normal verzahnte Planetspindel, um sicherzustellen, dass bei jedem Umlauf der Planeten ein Eingriff in jede Zahnlücke an der Zentralspindel und an dem innen verzahnten Gehäuse erfolgt.

Im Unterschied zum erfindungsgemäßen Füllteil hat eine übliche Füllschnecke in einem Füllteil keine vergleichbare Reinigung. Die Schnecke ist darauf angewiesen, dass nachdrängendes Einsatzmaterial das vorgehende Material herausschiebt. Das ist kaum zu kontrollieren. Das Einsatzmaterial strömt dorthin, wo der geringste Widerstand entgegensteht. Es läßt sich nicht sicherstellen, dass in dem gesamten, von der Schnecke im Füllteil offen gelassenen Durchtrittsraum überall gleiche Widerstände auftreten. Schon geringste Anbackungen/Verkleben können das Strömungsverhalten nachhaltig negativ beeinflussen. Ohne Eingreifen der Bedienungsleute kommt es kaum zu einer Reinigung.
In einem Planetwalzenextruder kommt es dagegen zwangsweise durch den jeweiligen Zahneingriff zu einer Reinigung. Das kann als Selbstreinigung bezeichnet werden.

Die Transportspindeln und der zugehörige Stand der Technik sind beschrieben in DE 102006033089A1, EP1844917A2, DE2702390A, EP1833101A1, DE10142890A1, US4981711, GB2175513A, US5947593, DE2719095.

Je nach Extrusionsgut kann auch eine Entgasung erforderlich werden. Wegen der Einzelheiten wird zum Beispiel auf folgende Entgasungsvorgänge verwiesen: DE102004061185A1, DE102004060966A1, DE102004053929A1, DE1020040050058A1, DE102004004237A1, DE69908565T2, DE69827497T2, DE69807708T2, DE69725985T2, DE69715781T2, DE69715082T2, DE69711597T2, DE69710878T2, DE69709015T2, DE69707763T2, DE69630762T2, DE69628188T2, DE69622375T2, DE69428309T2, DE69427539T2, DE69419146T2, DE69312852T2, DE69312246T2, DE69306874T2, DE69207369T2, DE68928567T2, DE68915788T3, DE60206271T2, DE60012108T2, DE19956483A1, DE19954313A1, DE10257377A1, DE10356821A1, DE10354546A1, DE10354379A1, DE10352444A1, DE10352440A1, DE10352439A1, DE10352432A1, DE10352431A1, DE10352430A1, DE10351463A1, DE10349144A1, DE10345043A1, DE10343964A1, DE10342822A1, DE10340977B4, DE10340976B4, DE10333927A1.

In der Zeichnung ist ein Ausführungsbeispiel der Erfindung dargestellt.

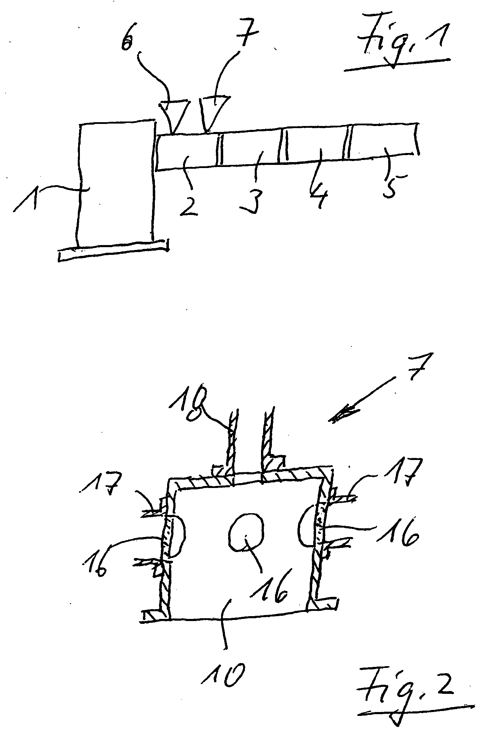

In Fig. 1 ist eine Extruderanlage schematisch dargestellt.
Darin ist mit 1 ein Antrieb bezeichnet, mit 2 ein Füllteil, mit 3, 4 und 5 andere Extuderteile. Das Füllteil 2 ist als Einschneckenmodul ausgebildet. Die Extruderteile 3,4 und 5 sind als Planetwalzenextrudermodule ausgebildet.
Am Füllteil 2 sind schematisch zwei Materialeintragvorrichtungen 6 und 7 dargestellt, die in Eintragöffnungen des Füllteiles 2 wirken.
Im Ausführungsbeispiel werden mit der Materialeintragvorrichtung 6 Kunststoff und Zuschläge in den Extruder aufgegeben.
Mit der Vorrichtung 7 werden staubförmige Mischungsanteile, im Ausführungsbeispiel gemahlene Farbpartikel in den Extruder aufgegeben.

Fig.2 zeigt Einzelheiten der Vorrichtung 7.
Dazu gehört ein zylindrisches Zuführungsgehäuse 10, das unmittelbar über einer Eintragöffnung im Gehäuse des Extruders sitzt. In dem Zuführungsgehäuse sind im Ausführungsbeispiel vier Filterscheiben 16 aus Sintermetall eingelassen. An den Filterscheiben 16 sind Saugleitungen 17 vorgesehen, über die Gas abgesaugt wird, das in das Zuführungsgehäuse 10 dringt. Dies geschieht über eine Zuleitung 18. Mit dem Gas werden die gemahlenen Farbpartikel in das Zuführungsgehäuse getragen.
An den Filterscheiben 16 setzen sich die Farbpartikel ab, wenn das Gas durch die Filterscheiben abgezogen wird.

Vor den Filterscheiben 16 baut sich dadurch eine Partikelschicht auf, die abfällt, wenn die Schicht eine entsprechende Dicke erreicht hat. Die Partikel fallen in die Eintragöffnung des Extruders.
In anderen Ausführungsbeispielen ist in dem Zuführungsgehäuse 10 eine Stopfschnecke vorgesehen. Die Stopfschnecke ist fliegend in dem Gehäusedeckel gelagert. Oben auf dem Deckel ist in der Deckelmitte ein Antrieb befestigt, der zugleich die Lagerung für die Stopfschnecke bildet. Die Zuleitung für das Gas und die Partikel ist dann seitlich aus der Mitte in dem Deckel vorgesehen.
Die Stopfschnecke füllt den Innenraum des Zuführungsgehäuses 10 bis auf ein notwendiges Bewegungsspiel aus. Die Schnecke schabt bei jeder Umdrehung die an den Filterscheiben abgesetzten Partikel ab und fördern die Partikel zwangsweise nach unten in die Eintragöffnung des Extruders. Dort werden die Partikel von der Füllschnecke in dem Füllteil 2 in den Extruder eingezogen. Die Partikel werden in weiteren Abschnitten des Extruders mit dem übrigen Einsatzmaterial vermischt.

## Patentansprüche

1. Extruder zur Verarbeitung von Einsatzmaterial, das mindestens teilweise aus feinkörnigen Partikeln mit einem geringen Raumgewicht besteht, wobei der Extruder ein Füllteil (2) aufweist,
wobei das Einsatzmaterial mit Gas durch eine Leitung (18) zu dem Füllteil (2) transportiert wird,
wobei die Leitung vor dem Füllteil (2) in ein Zuführungsgehäuse(10) mündet, wobei in dem Zuführungsgehäuse (10) ein Filter vorgesehen ist, der aus mindestens zwei porösen Filterscheiben (16) zusammengesetzt ist, wobei die Filterscheiben (16) durch Filterpartikel gebildet werden, die miteinander verbunden sind, wobei an dem Filter eine Saugleitung (17) angeschlossen ist, so dass das Gas aus dem Zuführungsgehäuse (10) abgezogen wird und das Einsatzmaterial in dem Zuführungsgehäuse aus dem Gas gefiltert wird,
wobei in dem Zuführungsgehäuse (10) eine Stopfschnecke vorgesehen ist und die Stopfschnecke alle Partikel in ihrem Zugriffsbereich von den Filterscheiben (16) abträgt und die abgetragenen Partikel in die Einlassöffnung des Extruders schiebt, **dadurch gekennzeichnet, dass** ebene Filterscheiben (16) verwendet und für unterschiedliche Zuführungsgehäuse gleiche Filterscheiben verwendet werden.

2. Extruder nach Anspruch 1, **gekennzeichnet durch** metallische Filterpartikel, welche miteinander versintert sind.

3. Extruder nach Anspruch 1 oder 2, **gekennzeichnet durch** einen Durchmesser der Filterscheiben an der Anströmfläche von 10 bis 50mm, vorzugsweise von 20 bis 40mm.

4. Extruder nach einem der Ansprüche 1 bis 3, **gekennzeichnet durch** eine Dicke der Filterscheiben von 0,5 bis 4mm, vorzugsweise von 1 bis 3mm.

5. Extruder nach einem der Ansprüche 1 bis 4, **dadurch gekennzeichnet, dass** die maximale Porengröße der Filterscheiben (169 an deren Anströmfläche kleiner als die maximale Größe der in den Extruder einzutragenden Partikel ist, vorzugsweise dass die maximale Porengröße der Filterscheiben (16) an deren Anströmfläche kleiner als die mittlere Größe der in den Extruder einzutragenden Partikel ist, noch weiter bevorzugt, dass die maximale Porengröße der Filterscheiben (16) an deren Anströmfläche kleiner als die kleinste Größe der in den Extruder einzutragenden Partikel ist und höchst bevorzugt **gekennzeichnet durch** eine Porengröße der Filterscheiben (16) an deren Anströmfläche, die 0, 03 bis 0,4mm beträgt.

6. Extruder nach Anspruch 5, **dadurch gekennzeichnet, dass** die Porengröße der Filterscheiben (16) mit zunehmendem Abstand von der Anströmfläche zunimmt.

7. Extruder nach einem der Ansprüche 1 bis 6, **gekennzeichnet durch** mehrschichtige Filterscheiben (16), vorzugsweise durch Filterscheiben (16) mit unterschiedlichen Schichten.

8. Extruder nach Anspruch 6 oder 7, **dadurch gekennzeichnet, dass** die Filterscheiben (16) aus separat hergestellten Schichten bestehen, vorzugsweise aus gemeinsam versinterten Schichten Schichten bestehen.

9. Extruder nach einem der Ansprüche 1 bis 8, **gekennzeichnet durch** runde und/oder eckige Filterscheiben (16), vorzugsweise durch kreisförmige Filterscheiben (16) oder rechteckförmige Filterscheiben (16).

10. Extruder nach einem der Ansprüche 1 bis 9, **dadurch gekennzeichnet, dass** die Filterscheiben (16) in einem Rahmen gehalten sind, wobei vorzugsweise eine Temperierung der Filterscheiben (16) vorgesehen ist, noch weiter bevorzugt **gekennzeichnet durch** Temperierungskanäle in dem die Filterscheiben (16) haltenden Rahmen und höchst bevorzugt durch Anschluss der Filterscheibentemperierung an die Extrudertemperierung.

11. Extruder nach einem der Ansprüche 1 bis 10, **gekennzeichnet durch** einen doppelschaligen Mantel des Zuführungsgehäuses (10) und dessen Temperierung.

12. Extruder nach Anspruch 11, **gekennzeichnet durch** einen Anschluss der Zuführungstemperierung an die Temperierung des Extruders.

13. Extruder nach Anspruch 11, **gekennzeichnet durch** eine Temperierung mit Luft, vorzugsweise mit einem Gebläse.

14. Extruder nach einem der Ansprüche 1 bis 13, **gekennzeichnet durch** eine Stopfschnecke mit zwei Schnecken in Form einer Doppelschnecke im Zuführungsgehäuse.

15. Extruder nach einem der Ansprüche 1 bis 14, **dadurch gekennzeichnet, dass** der Saugzug an den Filterscheiben steuerbar ist, vorzugsweise durch jeweils ein Saugzug für jede Filterscheibe (16) und durch ein steuerbares Sperrventil in jedem Saugzug sowie einen Druckluftanschluss zwischen Sperrventil und Filterscheibe (16) für Druckstöße zur Filterregenerierung.

## Claims

1. Extruder for processing feed material that consists, at least partly, of low bulk density, fine-grained particles,
wherein the extruder possesses a feed section (2),
wherein the feed material is transported with gas through a conduit (18) to the feed section (2),
wherein the conduit, upstream of the feed section (2), leads into a feed housing (10),
wherein a filter, composed of at least two porous filter discs (16), is provided in the feed housing (10),
wherein the filter discs (16) are formed by filter particles that are connected to one another,
wherein a suction pipe (17) is connected to the filter, such that the gas from the feed housing (10) is drawn off and the feed material is filtered out of the gas in the feed housing,
wherein a crammer screw is provided in the feed housing (10), and said crammer screw removes all particles in its access area from the filter discs (16) and pushes the removed particles into the inlet opening of the extruder, **characterised in that** flat filter discs (16) are used and the same filter discs are used for different feed housings.

2. Extruder according to claim 1, **characterised by** metallic filter particles that are sintered together.

3. Extruder according to claim 1 or 2, **characterised by** the filter discs having a diameter at the flow impinging face of 10 to 50mm, preferably 20 to 40mm.

4. Extruder according to one of claims 1 to 3, **characterised by** filter discs having a thickness of 0.5 to 4 mm, preferably 1 to 3 mm.

5. Extruder according to one of claims 1 to 4, **characterised in that** the maximum pore size of the filter discs (16) at their flow impinging face is smaller than the maximum size of the particles to be conveyed into the extruder, preferably that the maximum pore size of the filter discs (16) at their flow impinging face is smaller than the mean size of the particles to be conveyed into the extruder, even more preferably that the maximum pore size of the filter discs (16) at their flow impinging face is smaller than the smallest size of the particles to be conveyed into the extruder and most preferably **characterised by** a pore size of the filter discs (16) of 0.03 to 0.4mm at their flow impinging face.

6. Extruder according to claim 5, **characterised in that** the pore size of the filter discs (16) increases with increasing distance from the flow impinging face.

7. Extruder according to one of claims 1 to 6, **characterised by** multi-layered filter discs (16), preferably by filter discs (16) with different layers.

8. Extruder according to claim 6 or 7, **characterised in that** the filter discs (16) consist of separately manufactured layers, preferably consist of layers that have been sintered together.

9. Extruder according to one of claims 1 to 8, **characterised by** round and/or angular filter discs (16), preferably by circular filter discs (16) or rectangular filter discs (16).

10. Extruder according to one of claims 1 to 9, **characterised in that** the filter discs (16) are held in a frame, wherein preferably the filter discs (16) are temperature-controlled, even more preferably **characterised by** temperature-control channels in the frame that holds the filter discs (16) and most preferably by connecting the temperature control of the filter discs to the temperature control of the extruder.

11. Extruder according to one of claims 1 to 10, **characterised by** a double-walled casing of the feed housing (10) and its temperature control.

12. Extruder according to claim 11, **characterised by** a connection of the temperature control of the feed into the temperature control of the extruder.

13. Extruder according to claim 11, **characterised by** a temperature control with air, preferably with a fan.

14. Extruder according to one of claims 1 to 13, **characterised by** a crammer screw with two screws in the form of a twin screw in the feed housing.

15. Extruder according to one of claims 1 to 14, **characterised in that** the suction draughton the filter discs is controllable, preferably by a suction draught for each filter disc (16) and by a controllable shut-off valve in each suction draught as well as by a compressed air connection between shut-off valve and filter disc (16) for pressure surges for the filter regeneration.

## Revendications

1. Extrudeuse pour le traitement d'une matière de charge qui est constituée au moins partiellement de particules fines de faible densité,
l'extrudeuse comportant un élément de remplissage (2),
la matière de charge étant transportée jusqu'à l'élément de remplissage (2) par une conduite (18),
la conduite débouchant dans un boîtier d'alimentation (10) en amont de l'élément de remplissage (2),
un filtre qui est composé d'au moins deux disques de filtrage poreux (16) étant prévudans le boîtier d'alimentation (10),
les disques de filtrage (16) étant composés de particules filtrantes qui sont assemblées entre elles,
une conduite d'aspiration (17) étant raccordée au filtre, de sorte que le gaz est aspiré hors du boîtier d'alimentation (10) et la matière de charge est extraite du gaz et filtrée dans le boîtier d'alimentation,
et une vis de bourrage étant prévue dans le boîtier d'alimentation (10), laquelle vis de bourrage prélève dans les disques de filtrage (16) toutes les particules situées dans sa zone d'accès et pousse les particules prélevées dans l'ouverture d'admission de l'extrudeuse, **caractérisée en ce que** sont utilisés des disques de filtrage (16) plats et des disques de filtrage identiques pour des boîtiers d'alimentation différents.

2. Extrudeuse selon la revendication 1, **caractérisée par** des particules filtrantes qui sont frittées les unes avec les autres.

3. Extrudeuse selon la revendication 1 ou 2, **caractérisée par** un diamètre des disques de filtrage au niveau de la surface de réception de 10 à 50 mm, de préférence de 20 à 40 mm.

4. Extrudeuse selon une des revendications 1 à 3, **caractérisée par** une épaisseur des disques de filtrage de 0,5 à 4 mm, de préférence de 1 à 3 mm.

5. Extrudeuse selon une des revendications 1 à 4, **caractérisée en ce que** la taille maximale des pores des disques de filtrage (169 au niveau de leur surface de réception est inférieure a la taille maximale des particules qui doivent être admises, que, de préférence, la taille maximale des pores des disques de filtrage (16) au niveau de leur surface de réception est inférieure à la taille moyenne des particules qui doivent être admises, et que, plus préférablement, la taille maximale des pores des disques de filtrage (16) au niveau de leur surface de réception est inférieure à la taille minimale des particules qui doivent être admises, et **caractérisée** le plus préférablement par une taille des pores des disques de filtrage (16) au niveau de leur surface de réception qui est de 0,03 à 0,4 mm.

6. Extrudeuse selon la revendication 5, **caractérisée en ce que** la taille des pores des disques de filtrage (16) augmente avec la distance de la surface de réception.

7. Extrudeuse selon une des revendications 1 à 6, **caractérisée par** des disques de filtrage (16) à plusieurs couches, de préférence par des disques de filtrage (16) avec des couches différentes.

8. Extrudeuse selon la revendication 6 ou 7, **caractérisée en ce que** les disques de filtrage (16) sont constitués de couches fabriquées séparément et sont, de préférence, constitués par des couches couches frittées ensemble.

9. Extrudeuse selon une des revendications 1 à 8, **caractérisée par** des disques de filtrage (16) ronds et/ou angulaires, de préférence par des disques de filtrage (16) circulaires ou des disques de filtrage (16) rectangulaires.

10. Extrudeuse selon une des revendications 1 à 9, **caractérisée en ce que** les disques de filtrage (16) sont maintenus dans un cadre, de préférence une thermorégulation des disques de filtrage (16) étant prévue, et **caractérisée** plus préférablement par des canaux de thermorégulation dans le cadre maintenant les disques de filtrage (16) et le plus préférablement par un raccordement de la thermorégulation des disques de filtrage à la thermorégulation de l'extrudeuse.

11. Extrudeuse selon une des revendications 1 à 10, **caractérisée par** une enveloppe à double coque du boîtier d'alimentation (10) et de sa thermorégulation.

12. Extrudeuse selon la revendication 11, **caractérisée par** un raccordement de la thermorégulation de l'alimentation à la thermorégulation de l'extrudeuse.

13. Extrudeuse selon la revendication 11, **caractérisée par** une thermorégulation avec de l'air, de préférence avec un ventilateur.

14. Extrudeuse selon und des revendications 1 à 13, **caractérisée par** une vis de bourrage avec deux filets formant une vis à double filet dans le boîtier d'alimentation.

15. Extrudeuse selon une des revendications 1 à 14, **caractérisée en ce que** le tirage au niveau des disques de filtrage peut être contrôlé, de préférence par un tirage pour chaque disque de filtrage (16) et par une vanne d'arrêt contrôlable dans chaque tirage ainsi qu'un raccord d'air comprimé entre la vanne d'arrêt et le disque de filtrage (16) pour donner des à-coups de pression afin de régénérer le filtre.
